# EUROPÄISCHE PATENTSCHRIFT

(11) **EP 1 010 608 B1**
(45) Veröffentlichungstag und Bekanntmachung des Hinweises auf die Patenterteilung: **24.03.2004**
(21) Anmeldenummer: 99124739.6
(22) Anmeldetag: 13.12.1999
(51) Int. Cl.: B62D 47/02, B62D 53/00, B62D 53/08, F16F 9/512

(54) **Hydraulikanlage für die Dämpfung der Drehbewegung eines Drehgelenkes zwischen zwei Fahrzeugteilen eines Gelenkfahrzeuges, z. B. eines Gelenkbusses**
Hydraulic damping system for the rotary motion of rotating joint between two vehicle parts of articulated vehicles, for example articulated buses
Système hydraulique pour l'amortissement du mouvement rotatif d'une articulation tournante entre deux éléments de véhicule articulé par exemple autobus articulé

(30) Priorität: 18.12.1998 DE 29822472 U
(43) Veröffentlichungstag der Anmeldung: 21.06.2000
(73) Patentinhaber: HÜBNER GmbH, D-34123 Kassel (DE)
(72) Erfinder: Bittroff, Uwe, 34246 Vellmar (DE); Kloppmann, Sven, 34253 Lohfelden (DE); Schmelzer, Hans-Uwe, 88239 Wangen im Allgäu (DE); Klüttermann, Stephan, 34295 Edermünde-Besse (DE)
(74) Vertreter: WALTHER, WALTHER & HINZ Patentanwälte

(56) Entgegenhaltungen:
- WO-A-95/17328
- DE-A- 3 405 871
- DE-A- 19 646 500
- DE-A- 19 650 426

## Beschreibung

Die Erfindung betrifft eine Hydraulikanlage für die Dämpfung der Drehbewegung eines Drehgelenkes zwischen zwei Fahrzeugteilen eines Gelenkfahrzeuges, z.B. eines Gelenkbusses und ein Drehgelenk mit einer derartigen Hydraulikanlage.

Ein Drehgelenk der eingangs genannten Art ist aus dem Stand der Technik bekannt. Ein derartiges aus dem Stand der Technik bekanntes Drehgelenk umfasst zwei Gelenkglieder, die durch eine Achse verschwenkbar miteinander verbindbar sind. Das eine Gelenkglied kann hierbei unmittelbar an dem einen Fahrzeug bzw. Fahrzeugteil angelenkt sein, wohingegen das andere Gelenkglied um eine horizontal verlaufende Achse schwenkbar unmittelbar mit dem Fahrzeug bzw. Fahrzeugteil oder mittelbar durch ein Zwischenglied mit dem Fahrzeug bzw. Fahrzeugteil verbindbar ist. Durch diese horizontale Achse wird der Tatsache Rechnung getragen, dass das Drehgelenk auch Nickbewegungen der beiden Fahrzeuge relativ zueinander nachgeben können muss. Bei diesen Drehgelenken ist nach einer ersten Ausführungsform zu beiden Seiten der Längsachse des Fahrzeuges bzw. des Drehgelenkes jeweils ein Hydraulikzylinder vorgesehen, wobei die Hydraulikzylinder zum einen mit dem einen Gelenkglied und zum anderen mit dem Fahrzeug in Verbindung stehen. Die Ausrichtung der Dämpfungsglieder ist hierbei in Bezug auf die Mittellängsachse der Fahrzeuge winklig.

Bei einer anderen Ausführungsform ist ein doppelt wirkender Hydraulikzylinder vorgesehen, der quer zur Längsachse ausgerichtet am Drehgelenk befestigt ist.

Bekannt ist die elektrische Ansteuerung einer derartigen Hydraulikanlage; hierbei ist ein elektrisch ansteuerbares Proportionaldruck-Begrenzungsventil vorgesehen, das zwischen der Druck- und der Saugseite des doppeltwirkenden Hydraulikzylinders bzw. zwischen der Druck- und der Saugseite der beiden einfachwirkenden Hydraulikzylinder angeordnet ist. Durch ein derartiges Proportionaldruck-Begrenzungsventil wird erreicht, dass der Fließwiderstand des Hydraulikmediums erhöht wird. Die Folge hiervon ist wie bereits ausgeführt - eine Dämpfung in der Bewegung des Gelenkes beim Einknicken, beispielsweise bei Kurvenfahrt. Eine solche Dämpfung bei der Drehbewegung der beiden Gelenkglieder relativ zueinander ist absolut notwendig, da ansonsten das Fahrzeug nur schwer beherrschbar ist. Derartige Gelenkfahrzeuge sind häufig als sogenannte Pusher ausgebildet; unter einem Pusher versteht man ein Fahrzeug, bei dem die letzte Achse angetrieben ist. Versagt nun die Hydraulikanlage, d. h. findet keine Dämpfung bei der Drehbewegung der beiden Gelenkglieder relativ zueinander statt, dann kann bei höheren Geschwindigkeiten schon bei geringem Lenkeinschlag das Fahrzeug ausbrechen, da der Hinterwagen den Vorderwagen über die Querachse wegschiebt. Gleiches passiert bei Geradeausfahrt, wenn die Straße Spurrillen aufweist. Hierbei kann sich das Fahrzeug aufschaukeln. Das heißt, ein Ausfall der Hydraulikanlage ist insbesondere dann zu konstatieren, wenn das elektrisch ansteuerbare Proportionaldruck-Begrenzungsventil ausfällt. Dies ist dann der Fall, wenn die Stromversorgung des Fahrzeugs unterbrochen ist, da die Steuerung des Proportionaldruck-Begrenzungsventils über elektrische Signale erfolgt. Die elektrische Ansteuerung und damit einhergehend der Grad der Dämpfung dieses Proportionaldruck-Begrenzungsventils erfolgt in Abhängigkeit von dem Fahrzeugzustand, wobei Einflüsse wie beispielsweise die Geschwindigkeit des Fahrzeuges und die Stellung des Fahrzeugvorderwagens zum Fahrzeughinterwagen berücksichtigt werden. Fällt demzufolge bei höheren Geschwindigkeiten die Hydraulikanlage aus, beispielsweise dadurch, dass der Stromkreis unterbrochen ist, dann muss sichergestellt sein, dass das Fahrzeug zumindest gefahrlos abgebremst werden und mit stark verminderter Geschwindigkeit gefahrlos die nächste Reparaturwerkstätte anfahren kann.

Der Erfindung liegt daher die Aufgabe zugrunde, eine Hydraulikanlage der eingangs genannten Art derart weiterzubilden, bei der selbst bei Ausfall der elektrischen Anlage eines Fahrzeuges damit einhergehend der Dämpfungswirkung bei der Drehbewegung der beiden Gelenkglieder eines Gelenkes relativ zueinander durch Ausfall des Proportionaldruck-Begrenzungsventiles sichergestellt ist, dass das Fahrzeug in einem beherrschbaren Zustand bleibt.

Die Aufgabe wird erfindungsgemäß dadurch gelöst, dass in der Leitung zwischen der Saug- und der Druckseite der Dämpfungseinrichtung zusätzlich zu dem Proportional-Druckbegrenzungsventil ein mechanisches Druckbegrenzungsventil vorgesehen ist, wobei ein Mehrwegeventil zur wahlweisen Aussteuerung des Druckbegrenzungsventils oder des Proportional-Druckbegrenzungsventils vorgesehen ist. Ein derartiges Druckbegrenzungsventil ist so ausgebildet, dass es auf einen vorbestimmten Druckabfall einstellbar ist. Das heißt, das mechanische Druckbegrenzungsventil ist auf einen bestimmten Mindestdruck einstellbar, der -wie bereits erläutert- den Grad der Dämpfung bestimmt.

Hierbei kann nach zwei Ausführungsformen vorgesehen sein, dass das mechanische Druckbegrenzungsventil parallel oder in Reihe zu dem elektrisch arbeitenden Proportional-Druckbegrenzungsventil in der Leitung zwischen der Saug- und der Druckseite der Dämpfungseinrichtung angeordnet ist.

Im Einzelnen ist weiterhin vorgesehen, dass die hydraulische Dämpfungsanordnung eine doppeltwirkende Kolbenzylinderanordnung umfasst, bzw. zwei Kolbenzylinderanordnungen nach einer weiteren Ausführungsform. Eine solche doppeltwirkende Kolbenzylinderanordnung in quer zur Fahrzeuglängsrichtung eingebautem Zustand ergibt den Vorteil der kompakteren Bauweise.

Um zu gewährleisten, dass bei nicht mehr funktionsfähigem Proportional-Druckbegrenzungsventil und mithin bei offengeschaltetem Proportional-Druckbegrenzungsventil der hydraulische Pfad über das mechanische Druckbegrenzungsventil verläuft, ist dem mechanischen Druckbegrenzungsventil ein Mehrwegeventil und hier insbesondere ein 3/2-Wegeventil bei einer Parallelschaltung von Proportional-Druckbegrenzungsventil und mechanischem Druckbegrenzungsventil bzw. ein 2/2-Wegeventil bei Anordnung der Druckbegrenzungsventile in Reihe.

Weitere vorteilhafte Merkmale sind den Ansprüchen zu entnehmen.

Gegenstand der Erfindung ist ebenfalls ein Gelenk eines Gelenkfahrzeuges mit einer Hydraulikanlage, wie sie zuvor beschrieben wurde.

Anhand der Zeichnungen wird die Erfindung nachstehend beispielhaft näher erläutert:
- Figur 1: zeigt schematisch die Reihenschaltung des Proportional-Druckbegrenzungsventiles mit dem mechanisch ansteuerbaren Druckbegrenzungsventil bei einem doppeltwirkenden Zylinder;
- Figur 2: zeigt schematisch eine Reihenschaltung gemäß Fig. 1 mit zwei einfachwirkenden Zylindern;
- Figur 3: zeigt schematisch eine Parallelschaltung einer Hydraulikanlage mit doppeltwirkendem Zylinder;
- Figur 4: zeigt schematisch eine Parallelschaltung gemäß Fig. 1 mit zwei einfachwirkenden Zylindern.

Bei dem Drehgelenk sind zwei Gelenkglieder vorgesehen, die im Knickpunkt drehbar miteinander, beispielsweise durch einen Bolzen, verbunden sind. Das Gelenkglied kann hierbei unmittelbar an dem hier mit angedeuteten Fahrzeug angelenkt sein, wohingegen das Gelenkglied durch eine horizontal verlaufende Achse schwenkbar, gegebenenfalls durch ein Zwischenglied, mit dem Fahrzeug verbunden ist. Eine solche Verbindung ist notwendig, um Nickbewegungen der beiden Fahrzeuge relativ zueinander zu ermöglichen.

Gegenstand der Erfindung ist nunmehr die Schaltung, und zwar als Reihenschaltung oder Parallelschaltung des Proportional-Druckbegrenzungsventile zu dem mechanischen Druckbegrenzungsventil.

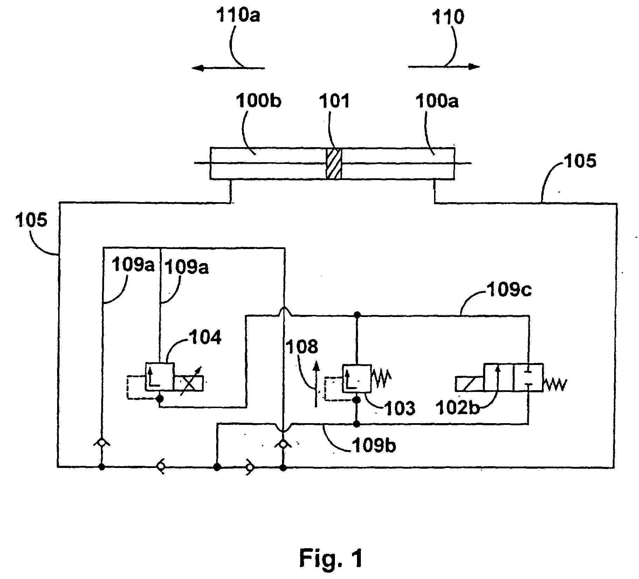

Wie aus Figur 1 erkennbar, ist hier eine Reihenschaltung bei einem doppeltwirkenden Zylinder vorgesehen. Der insgesamt mit 100 bezeichnete Zylinder mit den beiden Kammern 100a, 100b steht mit dem Kolben 101, mit dem Proportional-Druckbegrenzungsventil 104, dem 2/2-Wegeventil 102b und dem mechanischen Druckbegrenzungsventil 103 durch die Leitung 105 in Verbindung.

Für die Funktionsweise wird zunächst davon ausgegangen, dass der Kolben 101 der doppeltwirkenden Kolbenzylinderanordnung in Richtung des Pfeiles 110 läuft. Hierbei erhöht sich der Druck in der Kammer 100a, wohingegen in der Kammer 100b der Druck entsprechend abnimmt. Die Folge hiervon ist, dass durch das Proportional-Druckbegrenzungsventil im normalen Zustand der Durchfluss des Fluides begrenzt wird, und damit das Hydraulikfluid unter geringerem Druck durch die Leitungen 105 und 109a der Kammer 100b des doppeltwirkenden Kolben-Zylinders zugeführt wird. Bewegt sich der Kolben 101 in Richtung des Pfeiles 110a, dann ist der Lauf des Fluids wie folgt: von der Kammer 100b in die Leitung 105 und durch die Leitung 109b zu dem 2/2-Wegeventil 102b. Der Durchgang durch das Ventil 103 findet nicht statt, weil dieses durch das 2/2 Wegeventil 102b kurzgeschlossen ist.

Fällt das Ventil 104 aus, dann stellt sich bei Bewegung des Kolbens in Richtung des Pfeiles 110 die Funktionsweise wie folgt dar: Das Ventil 104 ist bei einer solchen Funktionsstörung geöffnet; das Fluid in der Leitung 109b wird dem Ventil 103 zugeführt, die Leitung 109c ist durch das 2/2-Wegeventil 102b blockiert. Erfolgt die Bewegung des Kolbens 101 in Richtung des Pfeiles 110a, dann ist der Fluidverlauf entsprechend umgekehrt. Das Druckbegrenzungsventil 103 ist so ausgebildet, dass es erst bei einem vorbestimmbaren Druck des Fluids in Richtung des Pfeiles 108 durchlässt. Das heißt, es geschieht bei Bewegung des Kolbens 101 in Richtung des Pfeiles 110a Folgendes:

Das Fluid wird aus der Kammer 100b herausgedrückt und läuft durch die Leitung 105 und 109b bis an das 2/2-Wegeventil 102b und das Druckbegrenzungsventil 103. Das 2/2-Wegeventil 102b sperrt, so dass sich vor dem Druckbegrenzungsventil 103 ein Druck aufbaut. Bei genügend hohem Druck in Richtung des Pfeiles 108 ist das Druckbegrenzungsventil durchlässig und das Fluid gelangt durch das nicht aktivierte, d.h. offene Proportional-Druckbegrenzungsventil 104 in die Kammer 100a. Hierbei findet aufgrund des Druckabfalls am Ventil 103 eine Dämpfung statt.

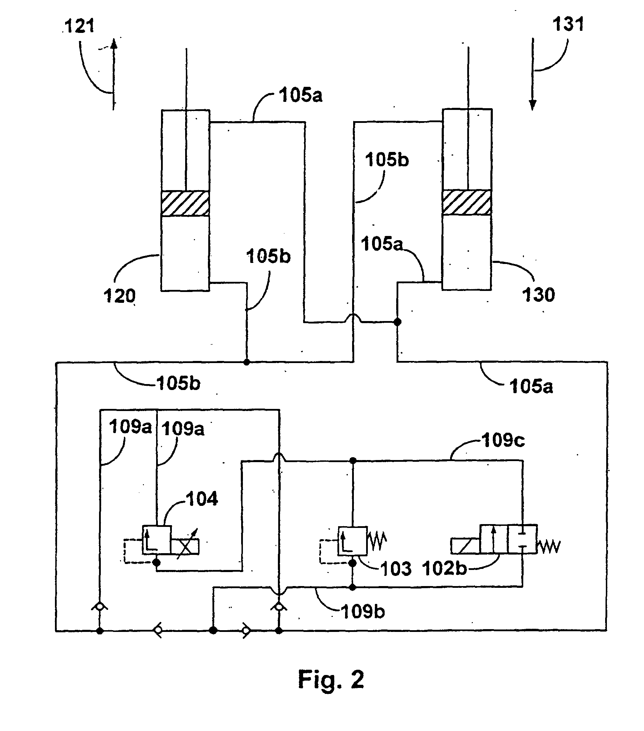

Die Funktionsweise der Reihenschaltung von zwei Zylindern gemäß Figur 2 ist wie folgt:

Bei sich in Richtung des Pfeiles 121 des Kolbenzylinderantriebes 120 bzw. in Richtung des Pfeiles 131 des Kolbenzylinderantriebes 130 aufbauendem Druck ist der Fluss des Fluids durch die Leitungen 105a und 109b zu dem 2/2-Wegeventil 102b, durch die Leitung 109c zu dem Proportional-Druckbegrenzungsventil 104 auf die jeweils andere Seite (Saugseite) der Kolbenzylinderanordnung 120, 130. Auch hier ist das Ventil 103 so ausgebildet, dass es erst bei höherem Druck das Fluid durchlässt.

Für den Fall des Ausfalles des Proportional-Druckbegrenzungsventiles 104 ist der Fluss des Fluids wie folgt:

Bei Druck in Richtung des Pfeiles 121 bzw. 131 der Kolbenzylinderanordnung 120, 130 steigt zunächst der Druck in den Leitungen 105a und 109b vor dem 2/2-Wegeventil 102b an, da das 2/2-Wegeventil für das Fluid aus der Leitung 109b geschlossen ist. Bei Erreichen eines vorbestimmten Druckes wird das Druckbegrenzungsventil 103 durchlässig, so dass das Fluid durch das Ventil 103 und das geöffnete Proportional-Druckbegrenzungsventil 104 auf die entsprechende Saugseite der Zylinder der Kolbenzylinderanordnung 120, 130 gelangen kann. Das Ventil 103 arbeitet in diesem Moment als Druckbegrenzer. Bei Stromausfall ist das Ventil 104 geöffnet und das 2/2-Wegeventil 102b nicht durchlässig.

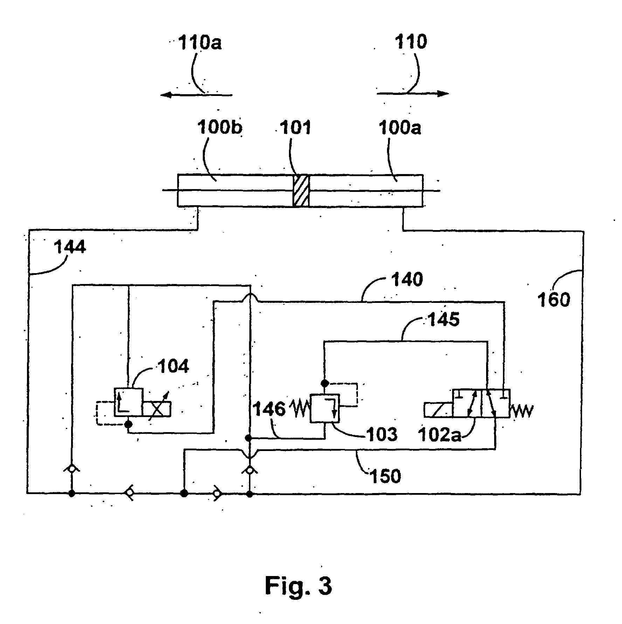

Die Funktionsweise der Parallelschaltung mit einem doppeltwirkenden Zylinder gemäß Figur 3 stellt sich wie folgt dar:

Bei der Parallelschaltung ist ein 3/2-Wegeventil 102a vorgesehen, ein Proportional-Druckbegenzungsventil 104 und ein mechanisches Druckbegrenzungsventil 103.

Bei funktionierendem Proportional-Druckbegrenzungsventil 104 ist bei Bewegung des Kolbens 101 des doppeltwirkenden Kolbenzylinders 100 in Richtung des Pfeiles 110 der Fluss des Fluids von der Kammer 100a durch das 3/2-Wegeventil 102a, durch die Leitung 140, durch das Proportional-Druckbegrenzungsventil 104 hindurch in die Kammer 100b (Saugseite) der Zylinder der jeweiligen Kolbenzylinderanordnung. Fällt nunmehr das Proportional-Druckbegrenzungsventil 104 aus, dann ist die Leitung 140 durch das 3/2-Wegeventil 102a gesperrt, so dass das Fluid von der Kammer 100a durch die Leitungen 145 und 146 durch das mechanische Druckbegrenzungsventil 103 in die Kammer 100b gelangt.

Gleiches gilt umgekehrt bei Bewegung des Kolbens 101 in Richtung des Pfeiles 110a bei nicht funktionierendem, das heisst offenem Ventil 104. Hierbei erfolgt der Fluss durch die Leitungen 150 und 145 in Richtung auf das Ventil 103 und durch die Leitung 146 in die Kammer 100a.

Bei funktionsfähigem Ventil 104 erfolgt bei Bewegung des Kolbens 101 in Richtung des Pfeiles 110a der Fluss des Hydraulikmediums von der Kammer 100b durch die Leitungen 144, 150 und 140 durch das Ventil 104 durch die Leitung 160 in die Kammer 100a. Die Leitung 145 ist hierbei durch das 3/2-Wegeventil 102a abgesperrt.

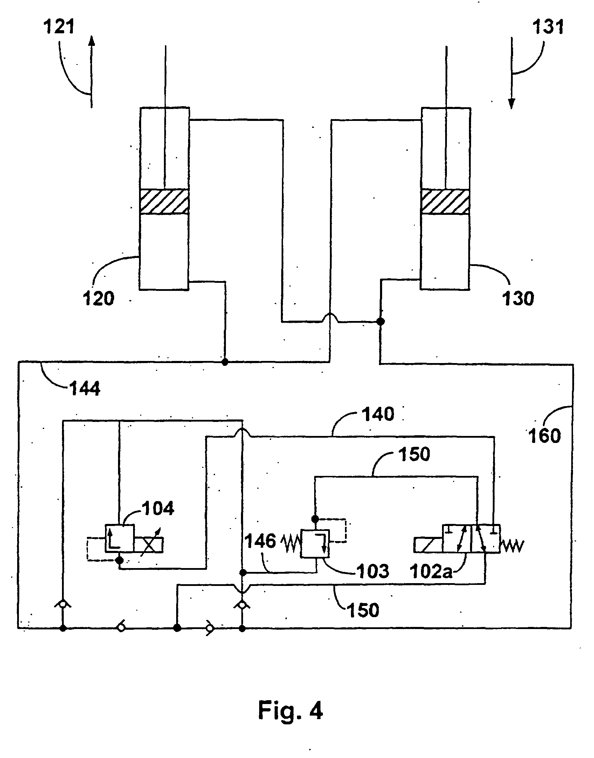

Nichts anderes ergibt sich aus der Darstellung gemäß Figur 4, wobei hier zwei einfachwirkende Kolbenzylinderanordnungen vorgesehen sind.

## Patentansprüche

1. Hydraulikanlage für die Dämpfung der Drehbewegung eines Drehgelenkes zwischen zwei Fahrzeugteilen eines Gelenkfahrzeuges, z. B. eines Gelenkbusses, umfassend eine hydraulische Dämpfungsanordnung (100a, 100b, 120, 130) sowie ein elektrisch steuerbares Proportional-Druckbegrenzungsventil (104) wobei das Proportional-Druckbegrenzungsventil zwischen der Druck- und der Saugseite des Dämpfungsanordnung angeordnet ist,
**dadurch gekennzeichnet,**
**dass** in der Leitung zwischen der Saug- und der Druckseite der Dämpfungsanordnung (100a, 100b; 120, 130) zusätzlich zu dem Proportional-Druckbegrenzungsventil (104) ein mechanisches Druckbegrenzungsventil (103) vorgesehen ist, wobei ein Mehrwegeventil (102b) zur wahlweisen Ansteuerung des mechanischen Druckbegrenzungsventils (103) oder des Proportional-Druckbegrenzungsventils (104) vorgesehen ist.

2. Hydraulikanlage nach Anspruch 1,
**dadurch gekennzeichnet,**
**dass** das mechanische Druckbegrenzungsventil (103) parallel zu dem elektrisch ansteuerbaren Proportional-Druckbegrenzungsventil (104) angeordnet ist.

3. Hydraulikanlage nach Anspruch 1,
**dadurch gekennzeichnet,**
**dass** das mechanische Druckbegrenzungsventil (103) in Reihe zu dem elektrisch ansteuerbaren Proportional-Druckbegrenzungsventil (104) angeordnet ist.

4. Hydraulikanordnung nach Anspruch 3,
**dadurch gekennzeichnet,**
**dass** bei einer Reihenschaltung des Ventiles (103) mit dem Ventil (104) parallel zu dem mechanischen Druckbegrenzungsventil (103) das Wegeventil (102b) angeordnet ist.

5. Hydraulikanordnung nach Anspruch 2,
**dadurch gekennzeichnet,**
**dass** bei einer Parallelschaltung des Ventils (103) mit dem Ventil (104) ein Wegeventil (102a) den Ventilen (103, 104) vorgeschaltet ist.

6. Hydraulikanlage nach Anspruch 4,
**dadurch gekennzeichnet,**
**dass** die hydraulische Dämpfungsanordnung eine doppeltwirkende Kolbenzylinderanordnung (100) umfasst.

7. Hydraulikanordnung nach Anspruch 4 oder 5,
**dadurch gekennzeichnet,**
**dass** die hydraulische Dämpfungsanordnung zwei Kolbenzylinderanordnungen (120, 130) umfasst.

8. Hydraulikanordnung nach Anspruch 5,
**dadurch gekennzeichnet,**
**dass** die hydraulische Dämpfungsanordnung eine doppeltwirkende Kolbenzylinderanordnung (100) umfasst.

9. Drehgelenk eines Gelenkfahrzeuges,
**gekennzeichnet durch**
eine Hydraulikanlage gemäß einem oder mehreren der Ansprüche 1 bis 9.

## Claims

1. Hydraulic system for damping the motion of rotation of a swivel joint between two vehicle parts of an articulated vehicle, of an articulated bus for example, comprising a hydraulic damping device (100a, 100b; 120, 130) as well as an electrically triggerable proportional pressure control valve (104), whereas the proportional pressure control valve is arranged between the force side and the suction side of the damping device,
**characterized in that**, in the conduit between the suction side and the force side of the damping device (100a, 100b; 120, 130), a mechanical pressure control valve (103) is provided in addition to the proportional pressure control valve (104), a multiple-way valve (102b) being provided for the alternative drive of the pressure control valve (103) or of the proportional pressure control valve (104).

2. Hydraulic system according to claim 1,
**characterized in that** the mechanical pressure control valve (103) is arranged in parallel relative to the electrically triggerable proportional pressure control valve (104).

3. Hydraulic system according to claim 1,
**characterized in that** the mechanical pressure control valve (103) is arranged in series relative to the electrically triggerable proportional pressure control valve (104).

4. Hydraulic system according to claim 3,
**characterized in that**, in case the valve (103) is connected in series with the valve (104), the directional valve (102b) is arranged parallel to the mechanical pressure control valve (103).

5. Hydraulic system according to claim 2,
**characterized in that**, in case the valve (103) is connected in parallel with the valve (104), a directional valve (1 02a) is added to the valves (103, 104).

6. Hydraulic system according to claim 4,
**characterized in that** the hydraulic damping device comprises a double-acting piston-cylinder arrangement (100).

7. Hydraulic system according to claim 4 or 5,
**characterized in that** the hydraulic damping device comprises two piston-cylinder arrangements (120, 130).

8. Hydraulic system according to claim 5,
**characterized in that** the hydraulic damping device comprises a double-acting piston-cylinder arrangement (100).

9. Swivel joint of an articulated vehicle
**characterized by** a hydraulic system according to one or several of the claims 1 to 9.

## Revendications

1. Système hydraulique pour l'amortissement du mouvement rotatif d'un joint tournant entre deux parties d'un véhicule articulé, p. ex. d'un bus articulé, comprenant un dispositif amortisseur hydraulique (100a, 100b, 120, 130) ainsi qu'un limiteur de pression proportionnel (104) susceptible d'être commandé électriquement, le limiteur de pression proportionnel étant disposé entre le côté compression et le côté aspiration du dispositif amortisseur,
**caractérisé en ce que**,
dans la conduite entre le côté aspiration et le côté compression du dispositif amortisseur (100a, 100b, 120, 130), est prévu, en plus du limiteur de pression proportionnel (104), un limiteur de pression mécanique (103), une valve multivoies (102b) étant prévue pour commander au choix le limiteur de pression mécanique (103) ou le limiteur de pression proportionnel (104).

2. Système hydraulique selon la revendication 1,
**caractérisé en ce que**
le limiteur de pression mécanique (103) et le limiteur de pression proportionnel (104) susceptible d'être commandé électriquement sont montés en parallèle.

3. Système hydraulique selon la revendication 1,
**caractérisé en ce que**
le limiteur de pression mécanique (103) et le limiteur de pression proportionnel (104) susceptible d'être commandé électriquement sont montés en série.

4. Système hydraulique selon la revendication 3,
**caractérisé en ce que**,
lorsque la valve (103) et la valve (104) sont montées en série, la valve à voies (102b) est disposée de manière à être parallèle au limiteur de pression mécanique (103).

5. Système hydraulique selon la revendication 2,
**caractérisé en ce que** ,
lorsque la valve (103) et la valve (104) sont montées en parallèle, une valve à voies (102a) est montée en amont des valves (103, 104).

6. Système hydraulique selon la revendication 4,
**caractérisé en ce que**
le dispositif amortisseur hydraulique comprend un dispositif piston-cylindre (100) à double effet.

7. Système hydraulique selon la revendication 4 ou 5,
**caractérisé en ce que**
le dispositif amortisseur hydraulique comprend deux dispositifs piston-cylindre (120, 130).

8. Système hydraulique selon la revendication 5,
**caractérisé en ce que**
le dispositif amortisseur hydraulique comprend un dispositif piston-cylindre (100) à double effet.

9. Joint tournant d'un véhicule articulé,
**caractérisé par**
un système hydraulique selon une ou plusieurs des revendications 1 à 9.
